# EUROPÄISCHE PATENTSCHRIFT

(11) **EP 2 052 284 B1**
(45) Veröffentlichungstag und Bekanntmachung des Hinweises auf die Patenterteilung: **29.08.2012**
(21) Anmeldenummer: 07818720.0
(22) Anmeldetag: 05.10.2007
(51) Int. Cl.: G02B 6/00, F21V 8/00, B60Q 1/00

(54) **FAHRZEUGSCHEINWERFER**
VEHICLE HEADLIGHT
PHARE DE VÉHICULE

(30) Priorität: 30.10.2006 DE 102006051058
(43) Veröffentlichungstag der Anmeldung: 29.04.2009
(73) Patentinhaber: Bayerische Motoren Werke Aktiengesellschaft, 80809 München (DE)
(72) Erfinder: ERDL, Helmut, 83569 Vogtareuth (DE)
(74) Vertreter: Mayer-Martin, Christian
(86) Internationale Anmeldenummer: PCT/EP2007/008643
(87) Internationale Veröffentlichungsnummer: WO 2008/052635

(56) Entgegenhaltungen:
- EP-A- 1 547 861
- EP-A- 1 596 126
- WO-A-03/074931
- DE-A1- 10 344 130
- DE-A1- 19 814 478
- DE-A1- 19 930 461
- US-A1- 2003 223 250

## Beschreibung

Die Erfindung betrifft einen Fahrzeugscheinwerfer mit einem Leuchtring.

Auch aufgrund designerischer Vorgaben wird insbesondere im Fahrzeugscheinwerferbereich häufig angestrebt, ringförmige bzw. ringähnliche Strukturen als Beleuchtungsmittel einzusetzen.

Hinsichtlich der Lichtverteilung sind durch einen Kraftfahrzeugscheinwerfer gesetzliche oder gesetzähnliche Vorgaben zu erfüllen.

Aus der DE102004003402 A1 ist bereits ein Fahrzeugscheinwerfer mit einem Lichtleitelement bekannt. Dabei wird Licht einer Lichtquelle am Brennpunkt eines Reflektors in den Querschnitt eines Lichtleiters eingekoppelt (Anspruch 1) und/oder an einer Brennlinie eines Reflektors in eine Lichteintrittsfläche eines Leuchtringes, der in diesem Dokument als Lichtleiter ausgeführt ist, eingekoppelt (Ansprüche 8 und 9).

Dieser zuletzt genannte Leuchtring wirkt in diesem Stand der Technik als undefinierte Streuoptik, welche die Rohlichtverteilung des Reflektors ebenso undefiniert aufweitet. Die Erfüllung jüngerer gesetzlicher Vorgaben, insbesondere hinsichtlich eines Tagfahrlichtes, ist mit einer solchen undefinierten Streuoptik nicht oder nur auf äußerst ineffiziente und unwirtschaftliche Weise möglich.

Aus der DE19833299 C1 ist eine Beleuchtungseinrichtung bekannt mit einem Leuchtmittel, dessen Lichtstrahlen an einem im Strahlengang angeordneten transparenten Lichtbrechungselement abgelenkt werden. Das plattenartige Lichtbrechungselement ist in der Art eines Fresnelprismas ausgebildet, bei dem verschiedene Lichtbrechungszonen stufenförmig zusammen geschobenen Prismenzonen eines Prismenkörpers entsprechen.

Aus der DE 10 2004 046 386 A1 ist ein Lichtleiter bekannt, aus dem Licht durch eine Reflexionsstruktur an einer Lichtaustrittsseite aus dem Lichtleiter herausgelenkt wird. Die Reflexionsstruktur ist dabei durch Prismen gebildet, die unterschiedliche Querschnittsform haben.

Aus der US 2003/0223250 A1 ist ein Lichtleiter bekannt, welcher mehrere koaxial angeordnete Ablenkoptiken aufweist, die auf verschiedenen Ringradien basieren.

Der Erfindung liegt nun die Aufgabe zu Grunde, einen Fahrzeugscheinwerfer mit einem Leuchtring zu betreiben.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert auf dem Gedanken, einen Fahrzeugscheinwerfer mit einem Leuchtring auszustatten, der eine Vielzahl von jeweils ringförmig ausgeführten Ablenkoptiken aufweist, die jeweils zumindest bevorzugt verschiedene Winkelbereiche beleuchten.

Dadurch können von dem Leuchtring abgestrahlte Lichtstrahlen unter Berücksichtigung gesetzlicher Vorgaben durch die.verschiedenen Ablenkoptiken jeweils verschieden und gezielt ausgerichtet werden und damit auf wirtschaftliche und effiziente Weise gesetzliche Vorgaben hinsichtlich der Leuchtverteilung auch mittels eines Leuchtringes erfüllt werden.

Vorzugsweise umfasst ein Fahrzeugscheinwerfer eine Lichtquelle, einen Leuchtring, in den Licht der Lichtquelle eintritt und eine Vielzahl von jeweils ringförmig ausgeführten Ablenkoptiken auf der Vorderseite oder der Rückseite des Leuchtringes, die jeweils, insbesondere bevorzugt, verschiedene Winkelbereiche beleuchten, wobei jede Ablenkoptik eine andere Hauptabstrahlrichtung aufweist, oder wobei die Richtungen der Abstrahlung mit maximaler Lichtstärke verschiedener Ablenkoptiken jeweils verschieden sind.

Dadurch kann ein Leuchtring mit homogener symmetrischer Erscheinung, insbesondere im Nahfeld (Entfernung zum Fahrzeugscheinwerfer ist kleiner als 20 Meter) des Fahrzeugscheinwerfers, geschaffen werden, der dennoch auf äußerst effiziente Weise die Vorgaben hinsichtlich der Leuchtverteilung erfüllt, da verschiedene ringförmige Ablenkoptiken gezielt oder bevorzugt verschiedene Winkelbereiche beleuchten

Besonders homogen und/oder symmetrisch ist die Erscheinung des Leuchtringes im Nahfeld dann, wenn die Hauptabstrahlrichtung einer Ablenkoptik im Wesentlichen parallel zur Fahrzeuglängsachse liegt. In diesem Fall lenkt die Ablenkoptik das Licht gegebenenfalls gar nicht oder Im Wesentlichen nicht ab, insbesondere dann, wenn bereits das von der Lichtquelle stammende Licht über einen Reflektor in eine Richtung parallel zur Fahrzeuglängsachse gelenkt wird, ehe es beispielsweise von hinten in den Leuchtring eintritt. Die Ablenkoptik kann insbesondere in diesem Fall der Aufweitung des durch den Leuchtring in eine Richtung parallel zur Fahrzeuglängsachse abgestrahlten Lichtes dienen. Unabhängig von der Erscheinung anderer Ablenkoptiken, die beispielsweise gezielt äußere Winkelbereiche beleuchten, wird durch diese Ablenkoptik erreicht, dass der gesamte Leuchtring im Nahfeld homogen und/oder symmetrisch erscheint.

Der im Wesentlichen für Licht transparente und aus Kunststoff oder Glas bestehende Leuchtring oder Lichtleiterring kann im Wesentlichen die Gestalt eines Torus aufweisen. Im Rahmen der Erfindung liegen dabei aber auch Leuchtringe, deren Form von einem idealen Torus abweicht. So muss weder der Torus noch der Torusquerschnitt genau kreisförmig sein. Elliptische Formen liegen beispielsweise ebenso im Rahmen der Erfindung wie Leuchtringe mit einem abgeplatteten Torusquerschnittkreis, insbesondere an der Vorder- oder Rückseite des Leuchtringes.

Vorzugsweise sind die verschiedenen ringförmig ausgeführten Ablenkoptiken koaxial ausgeführt und basieren auf verschiedenen Ringradien. Dies ermöglicht eine praktikable und effiziente Realisierung der Erfindung.

Eine bevorzugte Ausführungsform sieht vor, dass eine erste Ablenkoptik derart ausgeführt ist, dass durch sie Licht bevorzugt in vertikaler Richtung abgelenkt wird, und/oder dass durch sie Licht stärker in vertikaler Richtung abgelenkt wird als in horizontaler Richtung, und/oder dass der vertikale Winkel zwischen einer Hauptabstrahlrichtung der ersten Ablenkoptik und der Richtung der Fahrzeuglängsachse größer ist als der horizontale Winkel zwischen dieser Hauptabstrahlrichtung der ersten Ablenkoptik und der Richtung der Fahrzeuglängsachse. Je nach Ausführungsform kann die Hauptabstrahlrichtung die Richtung des Schwerpunktes der Lichtverteilung sein oder die Richtung der maximalen Lichtstärke sein. Eine Ablenkoptik kann im zweiten Fall auch zwei verschiedene Hauptabstrahlrichtungen aufweisen, beispielsweise die beiden Richtungen der größten und zweitgrößten Lichtstärke.

Eine alternative oder ergänzende Ausführungsform sieht vorteilhafterweise vor, dass eine zweite oder weitere Ablenkoptik derart ausgeführt ist, dass durch sie Licht bevorzugt in horizontaler Richtung abgelenkt wird, und/oder dass durch sie Licht stärker in horizontaler Richtung abgelenkt wird als in vertikaler Richtung, und/oder dass der horizontale Winkel zwischen einer Hauptabstrahlrichtung der zweiten oder weiteren Ablenkoptik und der Richtung der Fahrzeuglängsachse größer ist als der vertikale Winkel zwischen dieser Hauptabstrahlrichtung der zweiten oder weiteren Ablenkoptik und der Richtung der Fahrzeuglängsachse.

Alternativ oder zusätzlich ist vorzugsweise vorgesehen, dass eine dritte oder weitere Ablenkoptik derart ausgeführt ist, dass durch sie Licht bevorzugt nicht abgelenkt wird oder in Richtung der Fahrzeuglängsachse abgelenkt oder abgestrahlt wird. Dadurch kann die oben bereits beschriebene besonders homogene und/oder symmetrische Erscheinung des Leuchtringes im Nahfeld bewirkt werden.

Eine besonders effiziente Realisierung einer vorgegebenen Lichtverteilung durch einen Leuchtring bei einer gleichzeitigen möglichst homogenen und möglichst symmetrischen Erscheinung des Leuchtringes lässt sich dadurch erreichen, dass die erste Ablenkoptik und die zweite Ablenkoptik derart ausgeführt sind, dass durch die beiden Ablenkoptiken Licht stärker in horizontaler Richtung abgelenkt wird als in vertikaler Richtung, und/oder dass der horizontale Winkel zwischen einer Hauptabstrahlrichtung der ersten und zweiten Ablenkoptik und der Richtung der Fahrzeuglängsachse größer ist als der vertikale Winkel zwischen dieser Hauptabstrahlrichtung der ersten und zweiten Ablenkoptik und der Richtung der Fahrzeuglängsachse.

Vorzugsweise umfasst eine oder die Ablenkoptiken, insbesondere die erste und die zweite Ablenkoptik, jeweils eine Vielzahl von Prismen, die, beispielsweise einen Prismenring bildend, umlaufend auf der Vorderseite oder der Rückseite des Leuchtringes angeordnet sind, um ein Austreten des Lichts aus dem Leuchtring zu bewirken. Die Prismen sind dabei vorteilhafterweise derart ausgeführt, dass das in den Leuchtring eingetretene Licht durch die Prismen gestreut und/oder abgelenkt wird.

Durch die Verwendung der Prismenoptik wird eine definierte und gerichtete Aufweitung der vom Reflektor kommenden Rohstrahlen erreicht, wodurch es möglich ist, gesetzliche Vorgaben unter Berücksichtigung der Scheinwerferausführung oder der Fahrzeugausführung auf effiziente Weise einzuhalten. Die Verwendung üblicher Streuoptiken, beispielsweise Zylinder-, oder Kissenoptiken, würden dagegen lediglich eine rotationssymmetrische Aufweitung der Rohstrahlen bewirken.

Die Prismen sind vorzugsweise durch entsprechende Ausnehmungen oder entsprechende auskragende Strukturen umlaufend auf der Vorder- und/oder Rückseite des Leuchtringes gebildet und ragen radial in Richtung Mittelpunkt des Querschnittkreises oder vom Mittelpunkt des Querschnittkreises weg.

Besonders flexibel kann die Lichtabstrahlung von dem Leuchtring dadurch eingerichtet werden, und somit besonders gezielt und effizient eine vorgegeben Lichtverteilung erreicht werden, wenn verschiedenen Sektoren einer ringförmigen Ablenkoptik jeweils ein anderes Fresnelprisma zugeordnet oder aufgeprägt ist. Denn dann können sogar noch verschiedene Sektoren einer ringförmigen Ablenkoptik gezielt verschiedene Winkelbereiche beleuchten.

Die Prismen sind dazu derart ausgeführt, dass von einem ersten Ablenkoptik-Sektor Licht im Wesentlichen (je nach Ausführungsvariante mindestens 30 %, 50 %, 70 % oder 90 % der aus dem entsprechenden Ablenkoptik-Sektor stammenden Lichtstärke) parallel zu einer ersten Sektor-Hauptabstrahlgeraden austritt, und dass von einem zweiten Ablenkoptik-Sektor Licht im Wesentlichen (je nach Ausführungsvariante mindestens 30%, 50 %, 70 % oder 90 % der aus dem entsprechenden Ablenkoptik-Sektor stammenden Lichtstärke) parallel zu einer zweiten, zur ersten Sektor-Hauptabstrahlgeraden nicht parallelen, Sektor-Hauptabstrahlgeraden austritt.

Die Ablenkoptik-Sektoren können gleiche oder unterschiedliche Größe haben, und beispielsweise jeweils 5 Grad, 10 Grad, 15 Grad, 30 Grad, 45 Grad, 60 Grad oder 90 Grad aufspannen.

Besonders bevorzugt ist vorgesehen, dass der erste Ablenkoptik-Sektor dem zweiten Ablenkoptik-Sektor gegenüber liegt, und dass sich die erste Hauptabstrahlgerade und die zweite Hauptabstrahlgerade kreuzen. Dies ist insbesondere dann vorteilhaft, wenn dem Leuchtring eine Blende vorgelagert ist. Denn durch die genannte Kreuzung der Sektor-Hauptabstrahlgeraden können Abschattungen durch die Blende reduziert werden.

Besonders bevorzugt umfasst der Fahrzeugscheinwerfer einen Reflektor, der derart ausgeführt ist, dass von der Lichtquelle abgestrahltes Licht in einer Brennlinie fokussiert wird, welche im Wesentlichen im Eintrittsbereich des Leuchtringes liegt, wobei der Eintrittsbereich des Leuchtringes vorzugsweise an der Rückseite des Leuchtringes liegt.

Gemäß einer alternativen oder ergänzenden (beispielsweise im Falle eines Fahrzeugscheinwerfers mit zwei Leuchtringen) Ausführung umfasst der oder ein weiterer Leuchtring einen Lichtleiter, wobei ein Reflektor des Fahrzeugscheinwerfers derart ausgeführt ist, dass von der Lichtquelle abgestrahltes Licht in einem Brennpunkt fokussiert wird, welcher in einem Einkoppelbereich des Leuchtringes liegt. Dadurch wird Licht in den einen Lichtleiter umfassenden Leuchtring eingekoppelt. Der Leuchtring kann dabei einen von der Einkoppelstelle zum eigentlichen ringförmigen Teil des Leuchtringes lichtführenden, beispielsweise geraden, Lichtleiter umfassen. Anstelle der Lichteinspeisung über Lichtquelle und Reflektor ist in dieser Ausführungsvariante alternativ vorgesehen, dass das Licht einer Leuchtdiode, insbesondere direkt, in den Lichtleiter eingespeist wird.

Vorzugsweise sind dabei die Prismen oder anstelle der Prismen andere Streukörper derart im oder am Lichtleiter angeordnet und ausgeführt, dass das in den Leuchtring eingekoppelte Licht durch die Prismen oder Streukörper abgelenkt und/oder ausgekoppelt wird, insbesondere derart, dass von einem ersten Ablenkoptik-Sektor Licht im Wesentlichen (je nach Ausführungsvariante mindestens 30 %, 50 %, 70 % oder 90 % der aus dem entsprechenden Ablenkoptik-Sektor stammenden Lichtstärke) parallel zu einer ersten Sektor-Hauptabstrahlgeraden austritt, und dass von einem zweiten Ablenkoptik-Sektor Licht im Wesentlichen (je nach Ausführungsvariante mindestens 30%, 50 %, 70 % oder 90 % der aus dem entsprechenden Ablenkoptik-Sektor stammenden Lichtstärke) parallel zu einer zweiten, zur ersten Hauptabstrahlgeraden nicht parallelen, Sektor-Hauptabstrahlgeraden austritt.

Im Folgenden wird die Erfindung anhand von Beispielen unter Bezugnahme auf die folgenden Figuren näher erläutert:
- Figur 1: zeigt eine schematische Schnittdarstellung eines Kraftfahrzeugscheinwerfers;
- Figur 2: zeigt eine schematische Darstellung eines Leuchtringes in Draufsicht;
- Figur 3: zeigt eine schematische Darstellung eines Leuchtringes in Draufsicht;
- Figur 4: veranschaulicht den Zusammenhang zwischen einem Prisma und einer Prismenstruktur auf einem Leuchtring;
- Figur 5: zeigt einen Ausschnitt eines Leuchtringes;
- Figur 6: veranschaulicht die Wirkung der Prismenstruktur auf einem Leuchtringsektor;
- Figur 7: zeigt verschieden Ansichten einer Prismenstruktur.

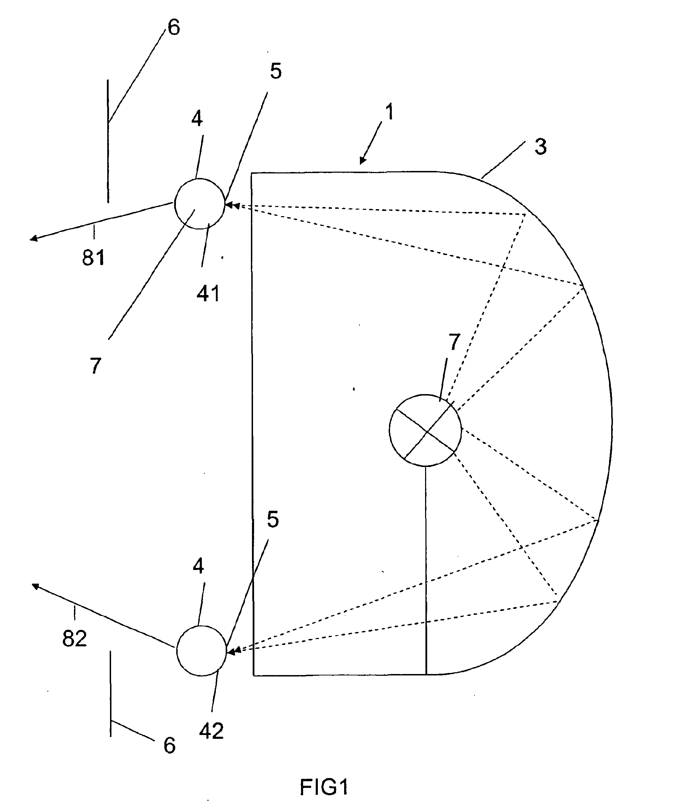

In Figur 1 ist ein Fahrzeugscheinwerfer 1 dargestellt mit einem Gehäuse, das einen Reflektor 3 umfasst. Das von einer Lichtquelle 7 abgestrahlte Licht wird über den Reflektor 3 auf eine kreisförmige Brennlinie abgebildet, welche mit der Licht-Eintrittsfläche 5 auf der Rückseite eines Leuchtringes 4 im Wesentlichen zusammenfällt. Der Leuchtring 4 ist hier im Querschnitt dargestellt. Die Leuchtring- oder Torusquerschnittfläche 7 ist in dieser Figur kreisförmig (Torusquerschnittkreis) dargestellt.

Durch nicht dargestellte Ablenkoptiken, insbesondere Prismen, auf der Rückseite des Leuchtringes 4 wird das eintretende Licht gestreut und definiert abgelenkt, so dass das Licht an der Vorderseite des Leuchtringes mit definierter Aufweitung im Wesentlichen in definierter Richtung wieder abgestrahlt wird bzw. wieder aus dem Leuchtring 4 austritt.

Um Abschattungen durch eine dem Fahrzeugscheinwerfer 1 vorgelagerte Blende 6 zu vermeiden, wird das Licht von verschiedenen gegenüber liegenden Ablenkoptik-Sektoren 41,42 im Wesentlichen entlang zweier verschiedener Hauptabstrahlgeraden 81,82 abgestrahlt, die sich vorzugsweise kreuzen.

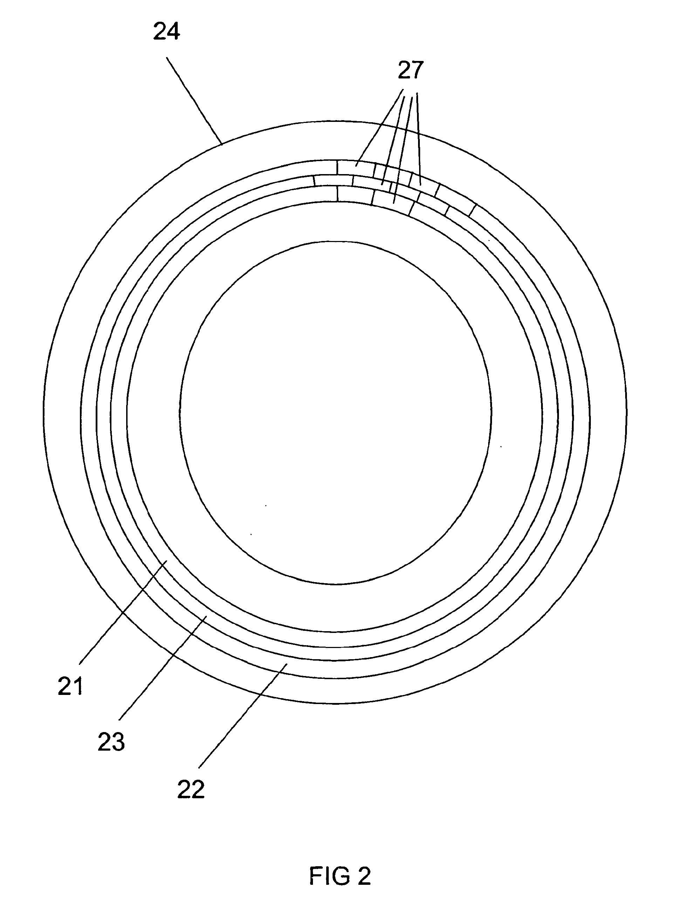

Figur 2 zeigt einen Leuchtring 24 von unten in Draufsicht mit einer ersten ringförmigen Ablenkoptik 21, einer zweiten ringförmigen Ablenkoptik 22 und einer dritten ringförmigen Ablenkoptik 23, jeweils auf der Rückseite des Leuchtringes 24. Jede der Ablenkoptiken 21,22,23 oder die erste und die zweite Ablenkoptik 21,22 bestehen aus einer Vielzahl aneinander gereihter Prismen 27 (nur teilweise dargestellt), die dem Leuchtring 24 auf der Rückseite aufgeprägt sind.

Eine bevorzugte Ausführungsform sieht vor, dass die erste Ablenkoptik 21 derart ausgeführt ist, dass durch sie Licht bevorzugt in vertikaler Richtung abgelenkt wird, und/oder dass durch sie Licht stärker in vertikaler Richtung abgelenkt wird als in horizontaler Richtung, und/oder dass der vertikale Winkel zwischen einer Hauptabstrahlrichtung der ersten Ablenkoptik 21 und der Richtung der Fahrzeuglängsachse größer ist als der horizontale Winkel zwischen dieser Hauptabstrahlrichtung der ersten Ablenkoptik und der Richtung der Fahrzeuglängsachse.

Eine alternative oder ergänzende Ausführungsform sieht vor, dass die zweite Ablenkoptik 22 derart ausgeführt ist, dass durch sie Licht bevorzugt in horizontaler Richtung abgelenkt wird, und/oder dass durch sie Licht stärker in horizontaler Richtung abgelenkt wird als in vertikaler Richtung, und/oder dass der horizontale Winkel zwischen einer Hauptabstrahlrichtung der zweiten Ablenkoptik 22 und der Richtung der Fahrzeuglängsachse größer ist als der vertikale Winkel zwischen dieser Hauptabstrahlrichtung der zweiten oder weiteren Ablenkoptik und der Richtung der Fahrzeuglängsachse.

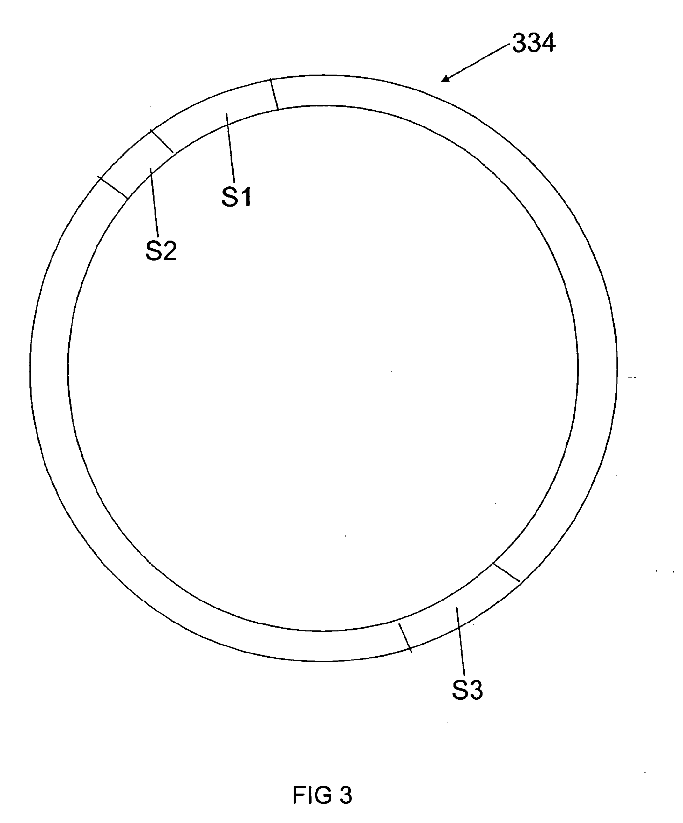

Exemplarisch für eine Ablenkoptik zeigt Figur 3 eine erste Ablenkoptik 334 in Draufsicht mit verschiedenen Ablenkoptik-Sektoren S1,S2,S3, wobei die Ablenkoptik-Sektoren S1 und S3 sich im Wesentlichen gegenüber liegen. Die Abmessungen der Ablenkoptik-Sektoren S1,S2,S3 oder die Winkel, die durch die Ablenkoptik-Sektoren S1,S2,S3 aufgespannt werden, können je nach Ausführungsvariante der Erfindung variieren.

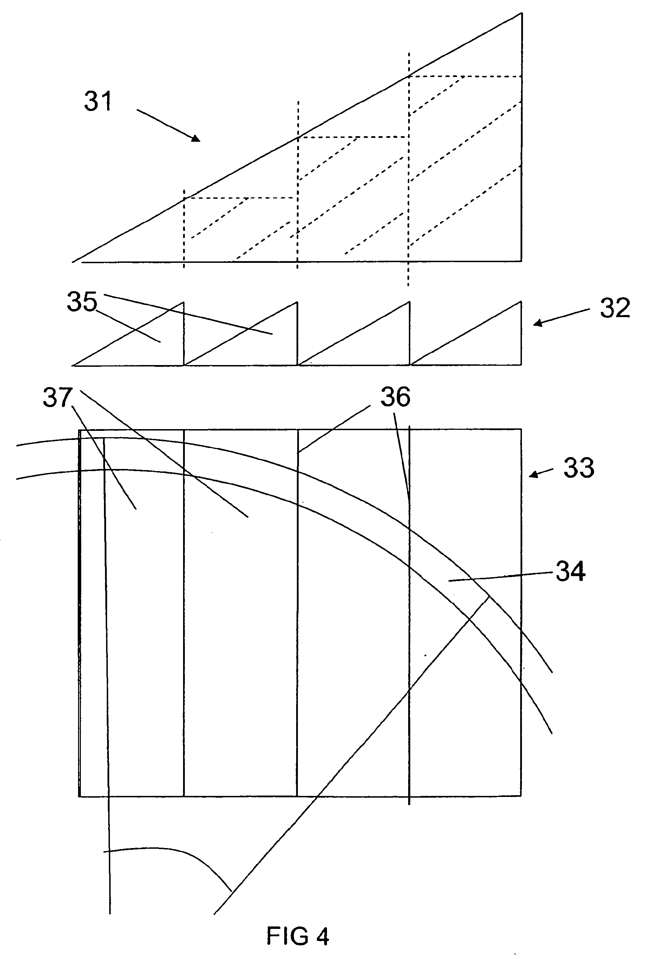

Figur 4 zeigt oben in Schnittdarstellung ein Prisma 31, durch das Licht definiert gestreut und/oder abgelenkt werden kann. Durch ein Entfernen der schraffiert dargestellten Säulen und ein Herabsetzen der verbleibenden prismatischen Strukturen entsteht ein aus Teilprismen 35 bestehendes Fresnelprisma 32, das hinsichtlich einfallenden Lichts von oben oder unten im Wesentlichen die gleichen optischen Wirkungen hat, wie das Prisma 31.

Unten ist ein solches Fresnelprisma 33 in Draufsicht dargestellt. Wird nun aus dem Fresnelprisma 33 ein ringsektorförmiger Abschnitt 34 von oben ausgestanzt und auf einen entsprechenden Leuchtringsektor aufgebracht, so entsteht ein Leuchtringsektor mit Prismen, die einen ringsektorförmigen Ausschnitt eines Fresnelprismas bilden. Verschiedenen Leuchtringsektoren können dabei gezielt verschieden ausgerichtete oder verschieden steile Fresnelprismen zugeordnet oder aufgeprägt werden.

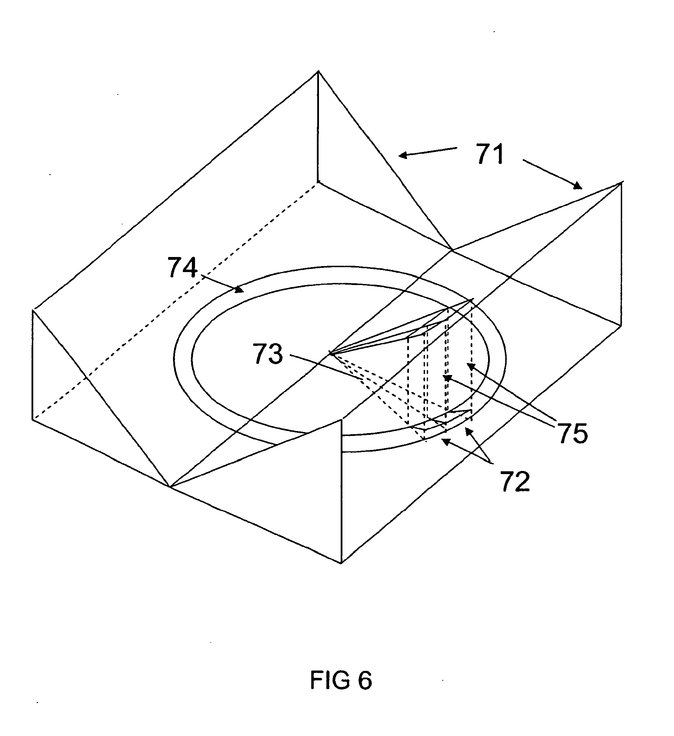

Die verschiedenen Teilprismen 37 des Fresnelprismas 33 werden in Draufsicht durch Rückstufungslinien 36 voneinander getrennt. Diese Rückstufungslinien 36 müssen nicht - wie in diesem Beispiel - parallele Geraden bilden, sondern können auch sternförmig vom Mittelpunkt des Leuchtringes ausgehende auseinander laufende Geraden (siehe Figur 6) bilden oder eine beliebige andere Gestalt haben.

Jeder Ablenkoptik und/oder jedem Ablenkoptik-Sektor kann nun auf diese Weise ein anderes Fresnelprisma zugeordnet werden, oder jede Ablenkoptik und/oder jeder Ablenkoptik-Sektor kann auf einem anderen Fresnelprisma basieren, um gezielt verschieden Vereiche zu beleuchten.

Die vorstehenden Erläuterungen dienen dem Verständnis der Erfindung. Die tatsächliche Herstellung eines erfindungsgemäßen Leuchtringes kann zwar auf diesen Überlegungen basieren, erfolgt aber beispielsweise basierend auf einem Spritzgussverfahren, dessen Ergebnis ein einstückiger Leuchtring samt vorgegebener Ablenkoptiken und Prismenstrukturen ist. Die Erstellung der entsprechenden Spritzgussformen basiert aber wieder auf oben genannten Überlegungen und entsprechenden Berechnungen.

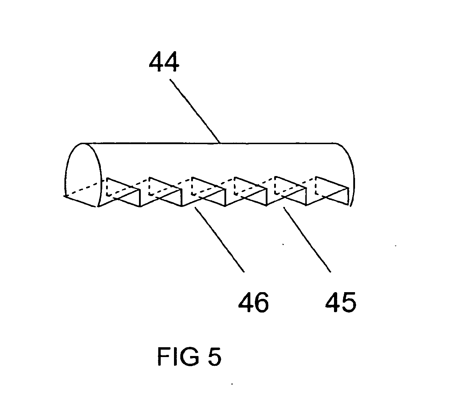

Figur 5 zeigt zur Veranschaulichung eine perspektivische Darstellung eines Leuchtringsektors 44 mit nur einer Ablenkoptik. Die Ablenkoptik wird durch eine auf der Rückseite 45 des Leuchtringes 44 angeordnete vereinfachte Prismenstruktur 46 im Sinne eines Fresnelprismas gebildet. Bei der dargestellten beispielhaften Ausführung ist der Leuchtringquerschnittskreis auf der Rückseite des Leuchtringes abgeplattet.

Für die Erzeugung einer Kreuzablenkung zeigt Figur 6 zwei gegenüberliegende jeweils eine optische Fläche definierende Prismen 71, die jeweils einer Hälfte des Leuchtringes 74 zugeordnet sind. Je nach geforderter Fronterscheinung des Ringes, werden in der Ebene des Leuchtringes 74 Rückstufungslinien oder Begrenzungslinien 73 definiert. In diesem Beispiel entsprechen die Rückstufungslinien oder Begrenzungslinien 73 einer äquidistanten umlaufenden Optikstruktur mit konstanter Teilung. Zunächst definieren die Begrenzungslinien 73 Prismenkeile 75. Die entsprechenden optischen Flächen werden entsprechend den Begrenzungslinien 73 zurück gestuft (wie anhand von Figur 4 erläutert), um analog den Fresnelschen Linsen eine realisierbare Bauhöhe der Teilprismen 72 auf der Leuchtringrückseite zu erhalten.

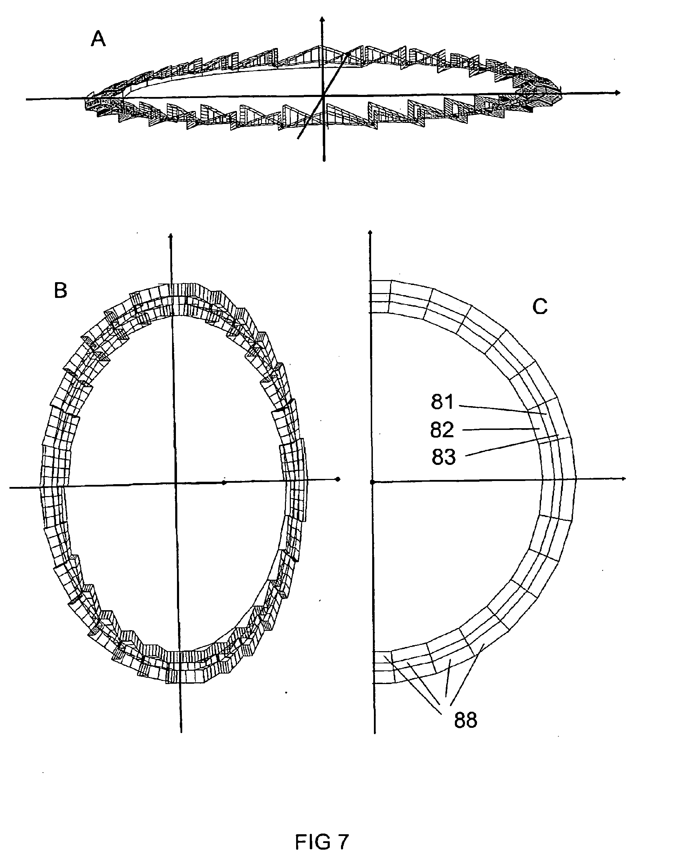

Figur 7 zeigt drei verschiedene Ansichten (A und B sind perspektivische Darstellungen; C zeigt eine Hälfte der Prismenstruktur in Draufsicht) einer ringförmigen Prismenstruktur mit mehreren im Wesentlichen konzentrischen Ablenkoptiken 81,82,83, die jeweils eine Vielzahl von Prismen 88 umfassen.

## Patentansprüche

1. Fahrzeugscheinwerfer (1)
mit einer Lichtquelle (7),
mit einem Leuchtring (4), in den Licht der Lichtquelle (7) eintritt,
mit einer Vielzahl von jeweils ringförmig ausgeführten Ablenkoptiken (21,22,23) auf der Vorderseite oder der Rückseite (45) des Leuchtringes (4), die jeweils verschiedene Winkelbereiche beleuchten,
bei dem verschiedene ringförmig ausgeführte Ablenkoptiken (21,22,23) koaxial ausgeführt sind und auf verschiedenen Ringradien basieren, **dadurch gekennzeichnet dass** eine erste Ablenkoptik (21) derart ausgeführt ist, dass durch sie Licht bevorzugt in vertikaler Richtung abgelenkt wird, und eine zweite Ablenkoptik (22) derart ausgeführt ist, dass durch sie Licht bevorzugt in horizontaler Richtung abgelenkt wird.

2. Fahrzeugscheinwerfer (1) nach Anspruch 1,
bei dem eine dritte Ablenkoptik (23) derart ausgeführt ist, dass durch sie Licht bevorzugt nicht abgelenkt wird oder bevorzugt in Richtung der Fahrzeuglängsachse abgelenkt wird.

3. Fahrzeugscheinwerfer (1) nach einem der vorhergehenden Ansprüche,
bei dem die erste Ablenkoptik (21) und die zweite Ablenkoptik (22) derart ausgeführt sind, dass durch die beiden Ablenkoptiken (21,22) Licht stärker in horizontaler Richtung abgelenkt wird als in vertikaler Richtung.

4. Fahrzeugscheinwerfer (1) nach einem der vorhergehenden Ansprüche, bei dem eine oder die Ablenkoptiken (21,22,23) jeweils eine Vielzahl von Prismen (27) umfasst, die umlaufend auf der Vorderseite oder der Rückseite (45) des Leuchtringes (4) angeordnet sind, um ein Austreten des Lichts aus dem Leuchtring (4) zu bewirken.

5. Fahrzeugscheinwerfer (1) nach einem der vorhergehenden Ansprüche, bei dem verschiedenen Sektoren einer ringförmigen Ablenkoptik (21,22,23) jeweils ein anderes Fresnelprisma zugeordnet oder aufgeprägt ist.

6. Fahrzeugscheinwerfer (1) nach einem der vorhergehenden Ansprüche, bei dem die Prismen (27,35,46) derart ausgeführt sind, dass das in den Leuchtring (4) eingetretene Licht durch die Prismen (35,46) gestreut und/oder abgelenkt wird.

7. Fahrzeugscheinwerfer (1) nach einem der vorhergehenden Ansprüche mit einem Reflektor (3), der derart ausgeführt ist, dass von der Lichtquelle (7) abgestrahltes Licht in einer Brennlinie fokussiert wird, welche im Eintrittsbereich (5) des Leuchtringes (4) liegt.

8. Fahrzeugscheinwerfer (1) nach Anspruch 7,
bei dem der Eintrittsbereich (5) des Leuchtringes (4) an der Rückseite des Leuchtringes (4) liegt.

9. Fahrzeugscheinwerfer (1) nach einem der vorhergehenden Ansprüche, bei dem ein Leuchtring (4) als Lichtleiter ausgeführt ist oder einen Lichtleiter umfasst,
mit einem Reflektor, der derart ausgeführt ist, dass von der Lichtquelle abgestrahltes Licht in einem Brennpunkt fokussiert wird, welcher in einem Einkoppelbereich des Leuchtringes liegt.

10. Fahrzeugscheinwerfer (1) nach Anspruch 9,
bei dem die Prismen (27,35,46) derart ausgeführt sind, dass das in den Leuchtring (4) eingekoppelte Licht durch die Prismen (27,35,46) abgelenkt und/oder ausgekoppelt wird.

## Claims

1. A vehicle headlight (1) with a light source (7), with an illumination ring (4) in which light from the light source (7) enters, with a large number of respective annular deflection optical systems (21, 22, 23) on the front or the back (45) of the illumination ring (4), each illuminating various angular ranges; in which various annular deflection optical systems (21, 22, 23) are configured coaxially and are based on various ring radii, **characterised in that** a first deflection optical system (21) is configured such that light is preferably deflected by it in the vertical direction, and a second deflection optical system (22) is configured such that light is preferably deflected by it in the horizontal direction.

2. A vehicle headlight (1) according to claim 1, wherein a third deflection optical system (23) is configured such that light is preferably not deflected by it or is preferably deflected in the direction of the vehicle longitudinal axis.

3. A vehicle headlight (1) according to any one of the preceding claims, wherein the first deflection optical system (21) and the second deflection optical system (22) are configured such that light is deflected more strongly in the horizontal direction than in the vertical direction by the two deflection optical systems (21, 22).

4. A vehicle headlight (1) according to any one of the preceding claims, wherein one deflection optical system or the deflection optical systems (21, 22, 23) in each case comprise a large number of prisms (27), which are arranged peripherally on the front or the back (45) of the illumination ring (4) in order to bring about an output of light from the illumination ring (4).

5. A vehicle headlight (1) according to any one of the preceding claims, wherein a different Fresnel prism is in each case associated with or impressed on various sectors of an annular deflection optical system (21, 22, 23).

6. A vehicle headlight (1) according to any one of the preceding claims, wherein the prisms (27, 35, 46) are configured such that the light entering the illumination ring (4) is scattered and/or deflected by the prisms (35, 46).

7. A vehicle headlight (1) according to any one of the preceding claims, with a reflector (3), which is configured such that light emitted by the light source (7) is focussed in a focussing line located in the inlet region (5) of the illumination ring (4).

8. A vehicle headlight (1) according to claim 7, wherein the inlet region (5) of the illumination ring (4) is located on the back of the illumination ring (4).

9. A vehicle headlight (1) according to any one of the preceding claims, wherein an illumination ring (4) is configured as a light guide or comprises a light guide, with a reflector, which is configured such that light emitted by the light source is focussed in a focal point, which is located in an input region of the illumination ring.

10. A vehicle headlight (1) according to claim 9, wherein the prisms (27, 35, 46) are configured such that the light input into the illumination ring (4) is deflected and/or output by the prisms (27, 35, 46).

## Revendications

1. Phare de véhicule (1) comprenant :
une source lumineuse (7), un anneau lumineux (4) recevant la lumière de la source lumineuse (7), un grand nombre d'optiques de réflexion (21, 22, 23), chacune de forme annulaire sur la face avant ou la face arrière (45) de l'anneau lumineux (4), qui éclaire chacune différentes plages angulaires, dans lequel les différentes optiques de déflection (21, 22, 23), de forme annulaire, sont coaxiales et basées sur différents diamètres d'anneaux,
**caractérisé en ce que**
la première optique de réflexion (21) dévie la lumière préférentiellement dans la direction verticale et une seconde optique de déflection (22) dévie préférentiellement la lumière dans la direction horizontale.

2. Phare de véhicule (1) selon la revendication 1, dans lequel une troisième optique de déflection (23) ne dévie pas la lumière ou la dévie préférentiellement dans la direction de l'axe longitudinal du véhicule.

3. Phare de véhicule (1) selon l'une des revendications précédentes, dans lequel la première optique de déflection (21) et la seconde optique de déflection (22) sont réalisées de sorte qu'à travers les deux optiques de déflection (21, 22), la lumière est déviée plus fortement dans la direction horizontale que dans la direction verticale.

4. Phare de véhicule (1) selon l'une des revendications précédentes, dans lequel une ou les optiques de déflection (21, 22, 23) ont chacune un grand nombre de prismes (27) qui sont disposés en périphérie sur la face avant ou la face arrière (45) de l'anneau lumineux (4) pour faire sortir la lumière à partir de l'anneau lumineux (4).

5. Phare de véhicule (1) selon l'une des revendications précédentes, dans lequel un prisme de Fresnel différent est associé ou est réalisé sur les différents secteurs d'une optique de déflection annulaire (21, 22, 23).

6. Phare de véhicule (1) selon l'une des revendications précédentes, dans lequel les prismes (27, 35, 46) sont réalisés de sorte que la lumière entrant dans l'anneau lumineux (4) soit difractée et/ou déviée par les prismes (35, 46).

7. Phare de véhicule (1) selon l'une des revendications précédentes, comprenant un réflecteur (3) qui focalise la lumière émise par la source lumineuse (7) dans une ligne focale se trouvant dans la zone d'entrée (5) de l'anneau lumineux (4).

8. Phare de véhicule (1) selon la revendication 7, dans lequel la zone d'entrée (5) de l'anneau lumineux (4) se trouve à la face arrière de l'anneau lumineux (4).

9. Phare de véhicule (1) selon l'une des revendications précédentes, dans lequel un anneau lumineux (4) est réalisé comme guide de lumière ou comprend un guide de lumière, avec un réflecteur qui focalise la lumière émise par la source lumineuse dans un foyer se trouvant dans une zone de couplage de l'anneau lumineux.

10. Phare de véhicule (1) selon la revendication 9, dans lequel les prismes (27, 35, 46) dévient et/ou découplent la lumière injectée dans l'anneau lumineux (4).
